# EUROPÄISCHE PATENTSCHRIFT

(11) **EP 2 024 723 B1**
(45) Veröffentlichungstag und Bekanntmachung des Hinweises auf die Patenterteilung: **28.11.2012**
(21) Anmeldenummer: 07728788.6
(22) Anmeldetag: 04.05.2007
(51) Int. Cl.: G01M 3/20

(54) **GASSENSOR MIT EINEM BEHEIZBARER GASSELEKTIV-DURCHLÄSSIGER MEMBRAN**
GAS SENSOR HAVING A HEATABLE, GAS-SELECTIVELY PERMEABLE MEMBRANE
DÉTECTEUR DE GAZ MUNI D'UNE MEMBRANE CHAUFFANTE À PERMÉABILITÉ SÉLECTIVE AU GAZ

(30) Priorität: 03.06.2006 DE 102006026125
(43) Veröffentlichungstag der Anmeldung: 18.02.2009
(73) Patentinhaber: Inficon GmbH, 50968 Köln (DE)
(72) Erfinder: GROSSE BLEY, Werner, 53125 Bonn (DE); WETZIG, Daniel, 50999 Köln (DE)
(74) Vertreter: von Kreisler Selting Werner
(86) Internationale Anmeldenummer: PCT/EP2007/054335
(87) Internationale Veröffentlichungsnummer: WO 2007/141098

(56) Entgegenhaltungen:
- EP-A2- 1 441 209
- WO-A1-96/41677

## Beschreibung

Die Erfindung betrifft einen Gassensor mit einem evakuierbaren Gehäuse, das durch eine gasselektiv-durchlässige Membran abgeschlossen ist, und einer auf der Membran angeordneten Heizvorrichtung.

DE 100 31 882 A1 (Leybold) beschreibt einen gasselektiven Sensor für Helium oder Wasserstoff, der ein Gehäuse aus Glas oder einem anderen Siliziumwerkstoff aufweist, das durch eine selektivgasdurchlässige Membran abgeschlossen ist. Das Gehäuse enthält einen Gasdrucksensor zur Messung des Gasdrucks. Nach Evakuierung des Gehäuses stellt sich im Gehäuseinneren ein Gasdruck ein, der die Menge des die Membran passierenden Prüfgases angibt. Die Membran ist eine mit fensterartigen Durchbrechungen versehene Siliziumscheibe. In jeder Durchbrechung befindet sich auf einer Membranwand eine Heizwendel aus Platin. Die Heizwendeln bilden insgesamt eine Heizvorrichtung zum Aufheizen der Membran, damit diese die gewünschten Eigenschaften der selektiven Gasdurchlässigkeit entwickelt.

EP 0 831 964 B1 (Leybold) beschreibt den Herstellungsprozess für eine selektiv gasdurchlässige Membran aus Silizium. Dabei wird eine Siliziumscheibe beidseitig mit Oxidationsschichten versehen und anschließend geätzt, so dass eine durchgehende SiO₂-Schicht nur an einer Seite der Scheibe erhalten bleibt. Dazwischen befinden sich fensterartige Durchbrechungen, in denen mit Hilfe von dünnschichttechnischen Verfahren Heizwendeln angebracht werden.

In DE 10 2004 034 381 A (Inficon) ist ein selektiver Gassensor beschrieben, bei dem das Gehäuse ebenfalls durch eine Membran abgeschlossen ist und einen Gasdrucksensor enthält.

Die erläuterten Gassensoren werden auch als Quarzfenstersensor bezeichnet. Gassensoren mit gasselektiver Membran werden zur Lecksuche benutzt, wenn ein Behälter oder eine Leitung auf Dichtigkeit untersucht werden soll. Das Prüfobjekt wird mit einem Prüfgas, z. B. Helium, gefüllt. Dann wird mit einem Prüfgassensor außerhalb des Prüfobjekts kontrolliert, ob Prüfgas ausgetreten ist. Oft wird dazu das mit Prüfgas gefüllte Objekt in eine Prüfkammer gebracht, die zusammen mit einem angeschlossenen Membransensor evakuiert wird, so dass Prüfgas durch eventuelle Lecks austreten und vom Membransensor nachgewiesen werden kann. Ein Quarzfenstersensor mit geheizter Membran muss eine sehr stabile Membrantemperatur aufweisen, damit das Prüfgassignal nicht driftet. Eine Drift dieses Signals geht unmittelbar in die Nachweisgrenze ein. Bei einer Membran mit temperaturgeregelter Heizvorrichtung erfolgt beim Abpumpvorgang während der Evakuierung der Prüfkammer eine deutliche Veränderung der Wärmeableitung vom den Gehäusewänden des Sensors durch den schnellen Druckabfall in der Prüfkammer, so dass trotz Temperaturregelung der Membran eine Signaldrift entsteht. Dadurch können nur noch relativ große Prüfgassignale gemessen werden oder es müssen unzumutbar lange Beruhigungszeiten abgewartet werden.

Der Erfindung liegt die Aufgabe zugrunde, einen Gassensor zu schaffen, bei dem die gewünschte Temperatur der Membran mit hoher Konstanz eingehalten wird, so dass die Signalstabilität des Gassensors erhöht wird und auch kleine Leckraten sicher gemessen werden können.

Der erfindungsgemäße Gassensor ist durch den Patentanspruch 1 definiert. Er weist auf der Membran mindestens eine zweite Heizvorrichtung auf, die unabhängig von der ersten Heizvorrichtung geregelt ist. Durch separate Temperaturregelung getrennter Bereiche der Membran besteht die Möglichkeit, unterschiedliche Temperatureinflüsse separat auszugleichen. So kann beispielsweise im mittleren Bereich der Membran, in dem kein Kontakt mit anderen Feststoffen vorhanden ist, eine unabhängige Temperaturregelung erfolgen, während im Randbereich, wo die Membran mit dem Gehäuse in Berührung steht, eine ebenfalls selbstständige Temperaturregelung erfolgt. Dadurch kann eine hohe Konstanz der Membrantemperatur erreicht werden, selbst bei stark wechselndem Totaldruck, beispielsweise beim Herunterpumpen einer Prüfkammer von Atmosphärendruck bis hin zum Hochvakuum.

Vorzugsweise ist die erste Heizvorrichtung in einem Bereich der Membran angeordnet, der nicht mit einer Wand des Gehäuses in direktem Kontakt steht, während die zweite Heizvorrichtung in einem Bereich angeordnet ist, der mit einer Wand des Gehäuses in direktem Kontakt steht. Auf diese Weise wird zwischen "freien Bereichen" der Membran und "abgestützten Bereichen" unterschieden und in beiden Bereichen erfolgen unabhängige Temperaturregelungen.

Gemäß einer Weiterbildung der Erfindung können auch zwei oder mehr Heizvorrichtungen vorgesehen sein, insbesondere entlang der Membranränder. Vorzugsweise ist jede der Zusatzheizungen auf der Membran mit eigenen Kontaktpads versehen. Dies ermöglicht einen einfachen elektrischen Kontakt und gewährleistet die Unabhängigkeit der einzelnen Zusatzheizungen. Alternativ hierzu können auch mehrere zweite Heizvorrichtungen dieselben Kontaktpads gemeinsam benutzen.

Die erste Heizvorrichtung weist zweckmäßigerweise zahlreiche Heizinseln auf, während die zweite Heizvorrichtung aus parallelen Leiterstreifen besteht. Die zweite Heizvorrichtung, die in der Regel von einer Wand des Behälters hinterlegt ist, hat einen nur geringen Einfluss auf die Gasdurchlässigkeit. In diesem Bereich sind keine Permeationsfenster vorhanden, so dass die Heizvorrichtung dort einfacher gestaltet sein kann.

Im Folgenden wird unter Bezugnahme auf die Zeichnungen ein Ausführungsbeispiel der Erfindung näher erläutert.

Es zeigen:
- Fig. 1: einen schematischen Längsschnitt durch einen gasselektiven Gassensor und
- Fig. 2: eine Ansicht der Membranausrichtung des Pfeiles II von Figur 1.

Der dargestellte Gasdrucksensor weist ein evakuierbares Gehäuse 10 auf, das einen rechteckigen Querschnitt hat und becherförmig gestaltet ist. Das Gehäuse 10 weist vier Seitenwände 11 und eine Bodenwand 12 auf. Die der Bodenwand 12 gegenüberliegende Seite ist mit einer Membran 13 verschlossen. Diese Membran ist gasselektiv durchlässig, beispielsweise für leichte Gase wie Helium und Wasserstoff. Die Gasdurchlässigkeit erfordert eine konstante Temperatur von etwa 250° C.

Die Membran 13 besteht aus Siliziumdioxid. Sie ist generell in der Weise gestaltet, wie in DE 100 31 882 A1 oder EP 0 831 964 B1 beschrieben.

Das Gehäuse 10 besteht aus Borosilikatglas. Durch die Ähnlichkeit der Materialien von Membranträger 13 und Gehäuse 10 können beide miteinander verbondet bzw. aneinander angeschmolzen werden, so dass weder Kleber noch sonstige Dichtungen erforderlich sind.

Das Gehäuse 10 ist evakuiert. Es weist für den Anschluss einer Vakuumpumpe einen Anschluss 14 auf, der im Betriebszustand abgeschmolzen oder anders vakuumdicht verschlossen ist.

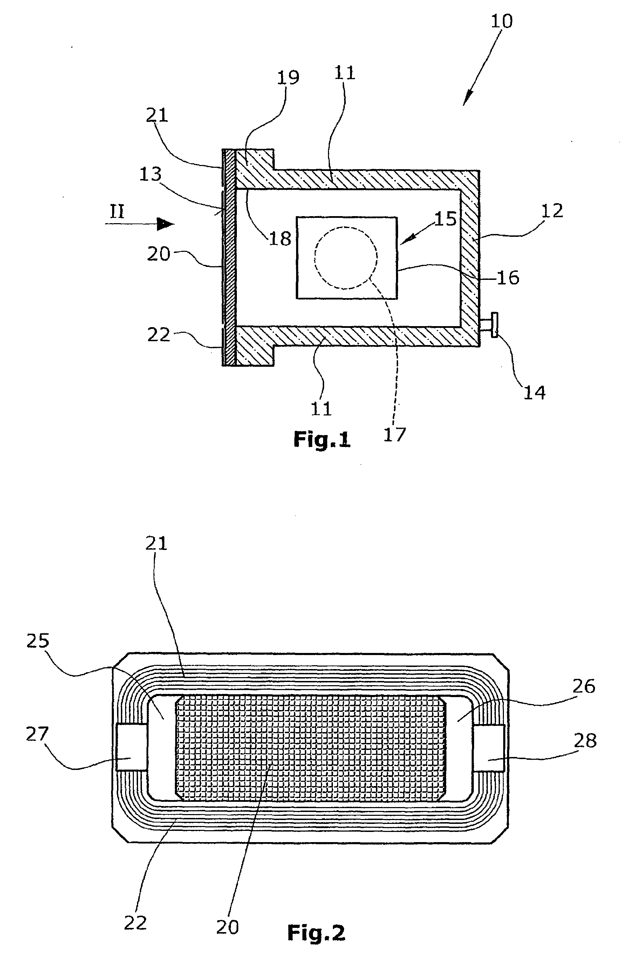

Das Gehäuse 10 enthält einen Gasdrucksensor. Dieser besteht hier aus einem Penning-Sensor wie er beispielsweise in DE 10 2004 034 381 beschrieben ist. Der Gasdrucksensor 15 weist zwei parallele Kathodenplatten 16 auf, von denen in Figur 1 nur eine sichtbar ist. Zwischen den Kathodenplatten 16 befindet sich ein Anodenring 17, dessen Achse orthogonal zur Plattenebene verläuft. Eine Spannungsquelle liefert die Gleichspannung, die zwischen die Kathodenplatten und den Anodenring gelegt wird. In dem Stromkreis befindet sich ein Strommessgerät zur Messung des Kathoden- oder Anodenstroms. Das zur Penning-Entladung notwendige Magnetfeld wird von einem außerhalb des geschlossenen Gehäuses 10 angebrachten Permanentmagneten erzeugt.

Figur 2 zeigt eine Frontansicht der Heizvorrichtungen, die auf der dem Gehäuse 10 abgewandten Seite der Membran 13 angebracht sind. Eine erste Heizvorrichtung 20 befindet sich im mittleren Feld der Membran 13 vor demjenigen Bereich, der keine Berührung mit der Wand des Gehäuses 10 hat. Die erste Heizvorrichtung 20 ist somit etwa deckungsgleich mit der Öffnung 18 (Figur 1) am vorderen Ende des Behälters. Die erste Heizvorrichtung 20 besteht aus zahlreichen Fenstern mit mäanderförmigen Heizwendeln gemäß EP 0 831 964 B1. Die Heizwendeln sind Platinmäander, die auf eine dünne Wandschicht aus SiO₂ aufgesputtert sind. Die Fenster sind schachbrettartig angeordnet und gleichmäßig über den mittleren Bereich der Membran 13 verteilt.

Das Gehäuse 10 hat bei dem vorliegenden Ausführungsbeispiel einen Flansch 19, an dessen Stirnseite die Membran 13 angebondet ist. Der Membranrand, der vor der Stirnseite angeordnet ist, ist mit einer zweiten Heizvorrichtung 21 bzw. 22 versehen. Diese zweiten Heizvorrichtungen sind längs des oberen und des unteren Randes der Öffnung 18 des Gehäuses angeordnet und um die Ecken der Frontseite herum auf die Schmalseiten der Membran geführt, wo sich Kontaktplatten befinden. An den vertikalen Schmalseiten der Öffnung 18 befinden sich die Kontaktpads 25, 26 und 27, 28, wobei die Kontaktpads 25 und 26 jeweils mit einem Ende der ersten Heizvorrichtung 21 und die Kontaktpads 27 und 28 mit den Enden der Heizvorrichtungen 21 und 22 verbunden sind.

Während die Mäanderstrukturen der ersten Heizvorrichtung 20 in Form zahlreicher Fenster oder Heizinseln angeordnet sind, bestehen die beiden zweiten Heizvorrichtungen 21 und 22 aus parallelen Leiterstreifen, die sich zwischen den Kontaktpads 27 und 28 erstrecken.

Die Heizvorrichtungen 20, 21 und 22 sind jeweils separat temperaturgeregelt. Sie werden unabhängig voneinander auf konstanter Temperatur gehalten. Dadurch entsteht eine hohe Konstanz der Membrantemperatur, selbst bei stark wechselndem Totaldruck, wie beispielsweise beim Evakuieren der Umgebung des Gehäuses 10 von Atmosphärendruck bis zum Hochvakuum.

## Patentansprüche

1. Gassensor mit einem evakuierten Gehäuse (10), das durch eine gasselektiv-durchlässige Membran (13) abgeschlossen ist, und einer auf der Membran (13) angeordneten temperaturgeregelten ersten Heizvorrichtung (20),
**dadurch gekennzeichnet,**
**dass** auf der Membran (13) mindestens eine zweite Heizvorrichtung (21, 22) angeordnet ist, die unabhängig von der ersten Heizvorrichtung (20) geregelt ist.

2. Gassensor nach Anspruch 1, **dadurch gekennzeichnet, dass** die erste Heizvorrichtung (20) in einem Bereich der Membran (13) angeordnet ist, der nicht mit einer Wand des Gehäuses (10) in direktem Kontakt steht, und dass die zweite Heizvorrichtung (21, 22) in einem Bereich angeordnet ist, der mit einer Wand des Gehäuses (10) in direktem Kontakt steht.

3. Gassensor nach Anspruch 1 oder 2, **dadurch gekennzeichnet, dass** zwei zweite Heizvorrichtungen (21, 22) vorgesehen sind.

4. Gassensor nach Anspruch 3, **dadurch gekennzeichnet, dass** die zweiten Heizvorrichtungen (21, 22) längs zweier paralleler Ränder der rechteckigen Membran (13) angeordnet sind.

5. Gassensor nach Anspruch 3 oder 4, **dadurch gekennzeichnet, dass** die zweiten Heizvorrichtungen (21, 22) auf der Membran (13) eigene Kontaktpads (27, 28) aufweisen.

6. Gassensor nach einem der Ansprüche 1 - 5, **dadurch gekennzeichnet, dass** die erste Heizvorrichtung (20) zahlreiche Heizinseln aufweist und die zweite Heizvorrichtung (21, 22) parallele Leiterstreifen aufweist.

## Claims

1. A gas sensor comprising an evacuated housing (10) closed by a gas-selectively permeable membrane (13), and a temperature-regulated first heating device (20) arranged on said membrane (13),
**characterized in**
**that** the membrane (13) is provided with at least one second heating device (21,22) arranged thereon, said at least one second heating device being regulated independently of the first heating device (20).

2. The gas sensor according to claim 1, **characterized in that** the first heating device (20) is arranged in a region of the membrane (13) which is not in direct contact with a wall of the housing (10), and that the second heating device (21,22) is arranged in a region which is in direct contact with a wall of the housing (10).

3. The gas sensor according to claim 1 or 2, **characterized in that** two second heating devices (21,22) are provided.

4. The gas sensor according to claim 3, **characterized in that** the second heating devices (21,22) are arranged along two parallel edges of the rectangular membrane (13).

5. The gas sensor according to claim 3 or 4, **characterized in that** the second heating devices (21,22) on the membrane (13) have contact pads (27,28) of their own.

6. The gas sensor according to any one of claims 1 - 5, **characterized in that** the first heating device (20) comprises a large number of heating islands and that the second heating device (21,22) comprises parallel conductor strips.

## Revendications

1. Détecteur de gaz comprenant un corps (10) mis sous vide, qui est fermé par une membrane (13) présentant une perméabilité sélective pour les gaz, et un premier dispositif de chauffage à température régulée (20) disposé sur la membrane (13),
**caractérisé en ce que** sur la membrane (13) est disposé au moins un deuxième dispositif de chauffage (21, 22) qui est régulé indépendamment du premier dispositif de chauffage (20).

2. Détecteur de gaz selon la revendication 1, **caractérisé en ce que** le premier dispositif de chauffage (20) est disposé dans une région de la membrane (13) qui n'est pas en contact direct avec une paroi du corps (10), et **en ce que** le deuxième dispositif de chauffage (21, 22) est disposé dans une région qui est en contact direct avec une paroi du corps (10).

3. Détecteur de gaz selon la revendication 1 ou 2, **caractérisé en ce qu'**il est prévu deux deuxièmes dispositifs de chauffage (21, 22).

4. Détecteur de gaz selon la revendication 3, **caractérisée en ce que** les deuxièmes dispositifs de chauffage (21, 22) sont disposés le long de deux bords parallèles de la membrane rectangulaire (13).

5. Détecteur de gaz selon la revendication 3 ou 4, **caractérisé en ce que** les deuxièmes dispositifs de chauffage (21, 22) présentent des plots de contact (27, 28) qui leur sont propres sur la membrane (13).

6. Détecteur de gaz selon l'une des revendications 1 à 5, **caractérisé en ce que** le premier dispositif de chauffage (20) présente de nombreux îlots de chauffage et **en ce que** le deuxième dispositif de chauffage (21,22) présente des bandes conductrices parallèles.
